# EUROPEAN PATENT SPECIFICATION

(11) **EP 0 881 859 B1**
(45) Date of publication and mention of the grant of the patent: **02.10.2002**
(21) Application number: 98108102.9
(22) Date of filing: 04.05.1998
(51) Int. Cl.: H05B 3/40, A47J 31/54, H05B 3/42

(54) **Electric through-flow water heating arrangement, in particular for coffee making and similar machines**
Elektrischer Durchlaufwassererhitzer Anordnung insbesondere für Kaffee oder ähnliche Maschinen
Arrangement d'un chauffe-eau continue électrique pour machines à café ou similaires

(30) Priority: 26.05.1997 IT PN970031
(43) Date of publication of application: 02.12.1998
(73) Proprietor: IRCA S.p.A., I-31020 S. Vendemiano, Treviso (IT)
(72) Inventor: Picone, Franco, 31011 Asolo, Treviso (IT); Antoniazzi, Giansante, 31015 Conegliano, Treviso (IT)
(74) Representative: Busca, Luciano

(56) References cited:
- EP-A- 0 388 829
- WO-A-94/23845
- DE-U- 9 400 205
- GB-A- 1 515 951
- US-A- 4 343 988

## Description

The present invention refers to an electric water heating arrangement of the through-flow type for coffee making and similar machines.

In particular, the present invention relates to an electrically powered arrangement adapted to heat up the water in a home coffee maker of the percolator or filter type, in which water contained in a reservoir is caused to circulate, thereby flowing through a heating conduit before reaching a hopper containing a filter and ground coffee, so that the hot brewed and filtered beverage can be collected in a heated pot placed underneath said hopper.

The heating conduit, which is usually shaped essentially like a horseshoe, ie. essentially in a U-shape, is in a heat-exchange relationship with an electric heating element housed in a sheath made preferably of aluminium, with which it forms the above cited electric water heating arrangement.

Thus the water heating arrangement as a whole has essentially a horseshoe-shaped structure, for example including a profile section made up by a double aluminium tube that mainly comprises two portions extending in a substantial side-by-side arrangement and in a heat-exchange relationship with each other in correspondence of a thin longitudinal connection zone, wherein one portion if formed by the sheath in which the electric heating element is housed whereas the other portion is formed by the heating conduit through which the water to be heated up to a temperature of approx. 100°C flows. In addition, above the heating arrangement there is disposed, again in a heat-exchange relationship therewith, a small metal pan adapted to support the pot for collecting the hot brewed beverage.

The activation of the heating arrangement is usually associated to the control of a thermostat that is adapted to detect the temperature of the heating conduit and to de-energize the electric heating element, with a certain time delay, when the heating conduit remains substantially dry, ie. without any water flowing therethrough any longer, after all of the water has been transferred from the reservoir to the beverage collecting pot. In fact, when there is no longer water inside said heating conduit , the temperature of the electric heating element rises sharply and tends to also cause the heating conduit itself to overheat. The temperature of said heating conduit is monitored by the thermostat, usually set at at a temperature rating situated anywhere between approx. 130°C and 150°C, which therefore de-energizes the electric heating element when the pre-determined threshold value is detected to have been reached

In a preferred manner the thermostat is arranged so as to detect the temperature of the heating conduit, rather than the temperature of the electric heating element, in order to enable the latter to practically go on operating under dry conditions for an additional period of time, as this has already been mentioned above, which is sufficient to maintain the beverage collected in the pot at an appropriate temperature that is usually situated at approx. 80°C.

In principle, the aluminium water heating arrangements of the type described above are technically effective, but fail to prove fully satisfactory in practice, since it can be readily appreciated that the contact of the water, or whatever liquid may be used to produce the beverage, with the aluminium walls of the heating conduit can actually give rise to sanitary or health problems in the resulting beverage.

This problem can be minimized if the water heating arrangement is implemented as described for example in the German utility model G 94 00 205.3, wherein the water to be heated is circulated through a stainless steel tube. Such a stainless steel tube is enveloped by a metal sheet whose inner surface is clad with a brazing alloy, and the whole heating conduit made in this way is placed in heat-exchange contact, via a longitudinal braze-welding seam, with the sheath of a traditional sheathed-type electric heating element.

Such a solution, however, turns out to be particularly complicated and expensive from both a manufacturability and a structural point of view. From an operational point of view it should be furthermore noticed that the heat conduction coefficient and the corrosion resistance of the steel tube turn out to be undesirably insufficient.

From WO 94/23 845 the practice is known to use aluminium tubes whose inner surface is lined with a film of non-toxic resinous material that can come into contact with edible liquids without causing them to suffer any contamination or pollution. Furthermore, such a lining of resinous material advantageously contributes to a reduced extent of limescale build-up inside the tubes which are further protected from corrosion and abrasion.

On the other hand, given the relatively low temperature values that can be tolerated without problems by the resinous material (preferably not in excess of 200°C), said tubes are generally used only in connection with normal sanitary water heating applications, while they are most obviously not suitable for use in connection with water heating arrangements in coffee making and similar machines, in which the temperature in the heating conduit may at times reach up to quite high values, substantially higher than 230°C.

From Document GB-A-1 515 951, safety means are known to prevent overheating and destruction of the electric sheathed-type heating element.

It therefore is a purpose of the present invention to provide a simple electric water heating arrangement of the through-flow type, in particular for coffee making and similar machines, which basically does not give rise to any toxicity problem through the contact with the water being heated therein.

In particular, it is a purpose of the present invention to provide a water heating arrangement of the above cited kind, which is particularly simple in its structure, is capable of being manufactured in a simple and quick manner, and at the same time is efficient and reliable in its operation.

According to the present invention, these aims are reached in an electric water heating arrangement of the through-flow type, in particular for coffee making and similar machines, embodying the features and chacteristics as recited in the appended claims.

Characteristics and advantages of the present invention will be more readily and clearly understood from the description that is given below by way of non-limiting example with reference to the accompanying drawings, in which
- Figure 1 is a schematical, partial plan view of the electrical through-flow water heating arrangement; and
- Figure 2 is an enlarged cross-sectional view taken along the line II-II of Figure 1, in which also the small support pan is partially visible.

The water heating arrangement according to the present invention is adapted to be used preferably in connection with coffee making and similar apparatuses, of the type that is generally known as the percolator or filter type, in which the water contained in a reservoir is caused to circulate through a conduit that is a part of the water heating arrangement, until it reaches a hopper accomodating a filter in which ground coffee is placed and below which the hot brewed and filtered beverage is then able to collect into a pot supported by a heated pan.

With reference to the above listed Figures, the water heating arrangement according to the present invention can be noticed to essentially comprise an electric heating element 3 of the sheathed type including a sheath 4 that has preferably a U-shape and is for instance rhomboidal in its cross-section. Inside said sheath 4 there is disposed a mass 5 of electrically insulating, heat conducting material (such as for instance magnesium oxide) in which an electric heating element 6 is embedded. In a per se known manner, the terminals 7 of the electric heating element 6 extend axially from the sheath 4 and are adapted to be connected to an appropriate electric power supply circuit (not shown) which also comprises at least a control thermostat 8.

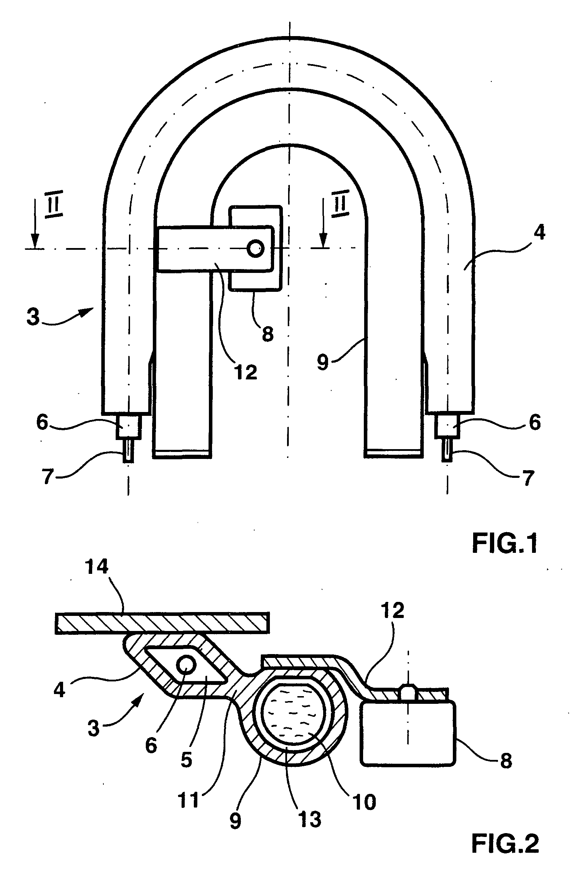

The sheathed-type electric heating element 3 is in a heat-exchange relationship with at least a conduit extending along the side thereof and made of a heat-resistant and heat-conducting material, adapted to heat up the water (generally indicated at 10 in Figure 2) as it flows therethrough.

In particular, the heating conduit 9 has a U-shape and is in heat-exchange contact with the sheath 4 of the heating element via a longitudinal joining seam 11 (Figure 2) which, according to a feature of the present invention, is sized to such a cross-section and/or configuration as to form a particularly effective thermal bond between the sheathed heating element 3 and the conduit 9. In any case, for the same length and the same heat-transfer coefficient, the joining seam 11 according to the present invention will preferably have a volume that is equal to approx. two to three times the volume of a joining seam of a traditional type.

The thermostat 8 is for instance installed on a heat-conducting bracket 12 mounted in contact with the heating conduit 9, preferably in correspondence of a localized area situated near or adjacent to said thermal bond 11.

In this connection it should be noticed that the cross-section of the joining seam 11 may either be substantially constant over the entire longitudinal extension thereof or it may be so enlarged locally as to form said accentuated thermal bond only in correspondence of the above mentioned localized area of the conduit 9 in which the bracket 12 supporting the thermostat 8 is mounted. In the first case the manufacturability of the sheath 4 and the conduit 9 is improved thanks to a simpler construction, since both said sheath and conduit may be advantageously formed from a single metal profiled section (preferably of aluminium) with a constant cross-section; in the second case, on the other hand, it is the operativity of the whole heating arrangement that is improved, as it will be more readily appreciated from the discussion set forth further on, owing to a greater responsiveness of the thermostat 8.

The water heating arrangement further comprises a small metal pan 14 (which is shown only partially in Figure 2) which is in heat-exchange contact with the sheathed heating element 3 and is used to support, and heat, the pot provided to collect the brewed beverage.

According to a feature of the present invention, the inner surface of the heating conduit 9 is lined with at least a layer 13 of non-toxic resinous material that by all means avoids any contamination of the water by the aluminium or any other material of which the conduit 9 is made.

Such a layer 13 of non-toxic material may for instance be formed by an epoxy-based paint applied to a thickness of several microns and also enables the conduit 9 to be effectively protected against corrosion, abrasion and limestone build-up.

As it has been already discussed above, tubed lined internally with a layer of non-toxic resinous material are known in the art (for instance from the afore cited Italian patent application no. PD93 A 000091), but it has up to now practically proved impossible for them to be used in applications implying conditions of relatively high temperatures, since the material 13 has a relatively low melting point and is quite likely to quickly deteriorate if heated up to any temperature in excess of approx. 200°C. Thus, the use of the resinous material 13 in the conduit 9 of an electric water heating arrangement for coffee making and similar machines has been hitherto contrary to a well-founded, etablished technical judgement.

In fact, in traditional water heating arrangements the sheathed heating element 3 reaches at steady-state condition, when water is circulating through the fluid heating conduit 9, a temperature of approx. 230°C, while the fluid heating conduit 9 itself is heated up to approx. 120°C.

When the heating conduit 9 is "running" dry, ie. without any water in it, the sheathed heating element 3 keeps "operating" , ie. remains energized for a further period of time in order to keep the pan 14 appropriately hot, along with the beverage contained in the pot supported by said pan, until the heating element is eventually de-energized by the thermostat 8 tripping, for instance after approx. 10 seconds. In this phase, the temperature of the fluid heating conduit 9 is caused to rise sharply and tends to further increase even after the de-energization of the sheathed heating element 3, since the latter, which reaches a temperature of approx. 330°C, keeps for some seconds to transfer heat to the fluid heating conduit which therefore reaches a peak temperature of approx. 280°C. Under such conditions, therefore, any layer 13 of non-toxic resin provided in the afore discussed manner would quickly deteriorate.

Conversely, it has also experimentally been found that in a corresponding water heating arrangement according to the present invention the sheathed heating element 3 reaches, when there is water circulating through the fluid heating conduit 9 lined with the resin layer 13, a steady-state temperature of approx. 180°C, while the fluid heating conduit 9, 13 is heated up to approx. 130°C The afore mentioned accentuated thermal bond 11 promotes in fact the heat-exchange process between said two parts. As a result, when the fluid heating conduit 9, 13 is "running" under dry conditions and the sheathed heating element 3 keeps operating for a further period of time, the sharp temperature rise of said heating element is quickly transferred to the conduit 9, 13 (via the accentuated thermal bond 11) and, hence, to the thermostat 8 (via the bracket 12) which is therefore caused to trip in a correspondingly quicker manner (after approx. 8 seconds) to de-emergize the heating element 3. As a result, the latter has practically no possibility of overheating to any excessive extent and heats up the fluid heating conduit 9, 13 to a peak value of approx. 180°C, ie. up to a temperature that can certainly be tolerated by the non-toxic resin 13, even repeatedly in the course of the time, substantially without any drawback. On the other hand, the above mentioned delay of approx. 8 seconds before the heating element 3 is de-energized by the thermostat is sufficient to maintain the pan 14, and the beverage in the pot supported by the latter, at an adequate temperature.

It will be appreciated that the above described operation of the arrangement may be further improved in the cited situation in which the accentuated thermal bond 11 is provided only in correspondence of the localized zone of the fluid heating conduit 9 at which the bracket 12 supporting the thermostat 8 is attached.

In any case, the accentuated thermal bond 11 constitutes safety means adapted to bring about a de-energization of the sheathed heating element 3 before the latter can heat up the conduit 9, 13 to any value in excess of a temperature threshold beyond which the layer 13 of resinous material starts to deteriorate and becomes damaged.

It will be appreciated that the above described water heating arrangement may be the subject of a number of modifications, such as for instance those involving the actual shape of the component parts and/or the materials used, without departing from the scope of the present invention.

## Claims

1. Electric through-flow water heating arrangement, in particular for use in connection with coffee making and similar apparatuses, comprising at least an electric sheathed-type heating element (3) arranged in a heat-exchange relationship with at least a conduit (9) extending along the side thereof and adapted to heat up the water as it flows therethrough, said heating element being associated to thermostatic control means (8) that monitor the temperature of said heating conduit ***(9),*** the latter being in turn made of heat-resistant and heat-conducting material, ***said water heating arrangement further comprising safety means (11) adapted to drive said thermostatic control means (8) so as to de-energize the electric heating element (3), in the case in which the same heating element tends to overheat,***
**characterized in that** the inner surface of said heating conduit (9) is lined with at least a layer (13) of non-toxic resinous material having a pre-determined low melting point, ***and said safety means (11) are arranged to cause de-energization of the heating element*** *(3)* before the temperature thereof rises to such a value as to heat up said heating conduit (9) to any value in excess of a pre-determined threshold temperature at which the resinous material becomes damaged.

2. Water heating arrangement according to claim 1, **characterized in that** said safety means are formed by at least an accentuated thermal bond (11) extending between the sheathed heating element (3) and the heating conduit (9), said accentuated thermal bond (11) being adapted to accelerate heat transfer from said sheathed heating element (3) to said thermostatic control means (8) and therefore cause said heating element to be de-energized in a quicker manner.

3. Water heating arrangement according to claim 2, in which thermostatic control means are adapted to detect the temperature of a localized zone of the heating conduit, **characterized in that** said accentuated thermal bond (11) only extends between the sheathed heating element (3) and said localized zone of the heating conduit (9).

## Patentansprüche

1. Elektrische Durchlaufwassererhitzeranordnung insbesondere für die Verwendung in Verbindung mit Kaffeemaschinen und ähnlichen Geräten, enthaltend wenigstens ein elektrisches Heizelement (3) vom umhüllten Typ, das in wärmetauschender Beziehung zu wenigstens einer Leitung (9) angeordnet ist, die sich längs desselben erstreckt und dazu eingerichtet ist, das hindurchfließende Wasser zu erhitzen, wobei dem Heizelement eine thermostatische Steuereinrichtung (8) zugeordnet ist, die die Temperatur der Heizleitung (9) überwacht, wobei letztere ihrerseits aus hitzefesten und wärmeleitenden Material besteht, wobei die Wassererhitzeranordnung weiterhin eine Sicherheitseinrichtung (11) aufweist, die dazu eingerichtet ist, die thermostatische Steuereinrichtung (8) so zu betreiben, daß diese das elektrische Heizelement (3) abschaltet im Falle, daß dieses Heizelement zu überhitzen tendiert,
**dadurch gekennzeichnet, daß** die innere Oberfläche der Heizleitung (9) mit wenigstens einer Schicht (13) aus nicht-toxischem Harzmaterial ausgekleidet ist, das einen vorbestimmten niedrigen Schmelzpunkt hat, und daß die Sicherheitseinrichtung (11) dazu eingerichtet ist, das Abschalten des Heizelementes (3) zu verursachen, bevor dessen Temperatur auf einen solchen Wert ansteigt, daß die Heizleitung (9) auf einen Wert über einer vorbestimmten Schwellentemperatur erhitzt wird, bei der das Harzmaterial beschädigt wird.

2. Wassererhitzeranordnung nach Anspruch 1, **dadurch gekennzeichnet, daß** die Sicherheitseinrichtung durch wenigstens eine besonders gute thermische Verbindung (11) gebildet ist, die sich zwischen dem umhüllten Heizelement (3) und der Heizleitung (9) erstreckt, wobei die besonders gute thermische Verbindung (11) dazu eingerichtet ist, den Wärmeübergang von dem umhüllten Heizelement (3) auf die thermostatische Steuereinrichtung (8) zu beschleunigen und daher zu bewirken, daß das Heizelement schneller abgeschaltet wird.

3. Wassererhitzeranordnung nach Anspruch 2, bei der die thermostatische Steuereinrichtung dazu eingerichtet ist, die Temperatur einer örtlichen Zone der Heizleitung zu erfassen, **dadurch gekennzeichnet, daß** die besonders gute thermische Verbindung (11) sich nur zwischen dem umhüllten Heizelement (3) und der örtlichen Zone der Heizleitung (9) erstreckt.

## Revendications

1. Système de chauffe-eau continu électrique, en particulier en vue d'une utilisation en liaison avec la préparation de café et des appareils similaires, comprenant au moins un élément chauffant électrique **(3)** de type gainé, placé en relation d'échange thermique avec au moins un conduit **(9)** s'étendant le long de son côté et adapté pour chauffer l'eau pendant qu'elle le traverse, ledit élément chauffant étant associé à des moyens de contrôle thermostatiques **(8)** qui surveillent la température dudit conduit chauffant **(9),** ce dernier étant fabriqué, quant à lui, dans un matériau résistant à la chaleur et conducteur thermique, ledit système de chauffe-eau comprenant, de plus, des moyens de sécurité **(11)** adaptés pour entraîner lesdits moyens de contrôle thermostatiques **(8)** afin de mettre hors tension l'élément chauffant électrique **(3)** dans le cas où ce même élément chauffant tend à surchauffer,
**caractérisé en ce que** la surface intérieure dudit conduit chauffant **(9)** est doublée avec au moins une couche **(13)** de matériau résineux non toxique ayant un point de fusion faible prédéterminé, et que lesdits moyens de sécurité **(11)** sont agencés pour provoquer la mise hors tension de l'élément chauffant **(3)** avant que sa température augmente jusqu'à une valeur capable de chauffer ledit conduit chauffant **(9)** à une valeur supérieure à une température de seuil prédéterminée à laquelle le matériau résineux devient endommagé.

2. Système de chauffe-eau selon la revendication 1, **caractérisé en ce que** lesdits moyens de sécurité sont formés par au moins une liaison thermique accentuée **(11)** s'étendant entre l'élément chauffant gainé **(3)** et le conduit chauffant **(9),** ladite liaison thermique accentuée **(11)** étant adaptée pour accélérer le transfert de chaleur dudit élément chauffant gainé **(3)** vers lesdits moyens de contrôle thermostatiques **(8)**, et donc pour provoquer la mise hors tension dudit élément chauffant d'une manière rapide.

3. Système de chauffe-eau selon la revendication 2, dans lequel les moyens de contrôle thermostatiques sont adaptés pour détecter la température d'une zone localisée du conduit chauffant, **caractérisé en ce que** ladite liaison thermique accentuée **(11)** ne s'étend qu'entre l'élément chauffant gainé **(3)** et ladite zone localisée du conduit chauffant **(9).**
